# EUROPÄISCHE PATENTSCHRIFT

(11) **EP 4 044 141 B1**
(45) Veröffentlichungstag und Bekanntmachung des Hinweises auf die Patenterteilung: **03.04.2024**
(21) Anmeldenummer: 21156303.6
(22) Anmeldetag: 10.02.2021
(51) Int. Cl.: G08B 21/22, G01S 13/46, G01S 13/88

(54) **VERFAHREN ZUR ERMITTLUNG EINES ABSTANDS ZWISCHEN ZWEI ENDGERÄTEN, COMPUTERPROGRAMM, SPEICHERMEDIUM UND ENDGERÄT**
METHOD FOR DETERMINING A DISTANCE BETWEEN TWO TERMINALS, COMPUTER PROGRAM, STORAGE MEDIUM AND TERMINAL
PROCÉDÉ DE DÉTERMINATION D'UNE DISTANCE ENTRE DEUX TERMINAUX, PROGRAMME INFORMATIQUE, SUPPORT D'ENREGISTREMENT ET TERMINAL

(43) Veröffentlichungstag der Anmeldung: 17.08.2022
(73) Patentinhaber: Deutsche Telekom AG, 53113 Bonn (DE)
(72) Erfinder: WITYCH, Michael, 53227 Bonn (DE)
(74) Vertreter: Braun-Dullaeus Pannen Emmerling Patent- & Rechtsanwaltspartnerschaft mbB

(56) Entgegenhaltungen:
- EP-B1- 2 789 181
- US-A1- 2008 100 502
- ZAND POURIA ET AL: "A high-accuracy phase-based ranging solution with Bluetooth Low Energy (BLE)", 2019 IEEE WIRELESS COMMUNICATIONS AND NETWORKING CONFERENCE (WCNC), IEEE, 15. April 2019 (2019-04-15), Seiten 1-8, XP033652153, DOI: 10.1109/WCNC.2019.8885791 [gefunden am 2019-10-28]

## Beschreibung

Die Erfindung betrifft ein Verfahren zur Ermittlung eines Abstandes zwischen einem ersten Endgerät und einem weiteren Endgerät, insbesondere zwischen zwei Mobiltelefonen. Das Verfahren basiert auf dem Senden und Auswerten eines Funksignals und eines Gegenfunksignals. Obwohl das Verfahren bei vorliegenden Reflexionen des Funksignals und Gegensignals keine verwertbare Maßstabsinformation besitzt, kann es trotzdem die metrische Zielgröße als gemessenen Abstand (statistisch gesehen) plausibel korrigieren.

Die Bestimmung eines Abstandes zwischen zwei Endgeräten, insbesondere zwei Mobiltelefonen oder Smart-Devices, wird beispielsweise bei der Eindämmung einer Pandemie genutzt, um basierend auf dem Nutzerverhalten eines Endgerätbenutzers Infektionen und Infektionsketten nachverfolgen zu können oder eine Nutzerverhaltensänderung bewerten zu können. Hierbei wird häufig der Abstand zwischen den Endgeräten basierend auf einer Funkverbindung, beispielsweise Bluetooth-Verbindung, bestimmt.

In diesem Zusammenhang zeigt "ZAND POURIA ET AL: "A high-accuracy phase-based ranging solution with Bluetooth Low Energy (BLE)", 2019 IEEE WIRELESS COMMUNICATIONS AND NETWORKING CONFERENCE (WCNC), IEEE, 15. April 2019 (2019-04-15), Seiten 1-8, XPO33652153, DO!: 10.1109/INCNC.2019.8885791" ein Verfahren zur Ermittelung eines Abstandes zwischen zwei Endgeräten basierend auf einem Ansatz, der auf den Phasen der Funksignale der Endgeräte beruht.

Dabei ist es bekannt, dass elektromagnetische Distanzmessverfahren zwischen zwei Endgeräten bei Vorhandensein von Reflexionen der Funksignale erhebliche Fehler aufweisen. Wenn man beispielsweise das Hauptsignal (maximale Amplitude) nicht der geometrisch kürzesten Strecke folgt, sondern über Reflexionspunkte zum Ziel gelangt, wirken sich die Fehler der Reflexion immer derart aus, dass die ermittelte Distanz zwischen den Endgeräten größer ist als der reale Abstand. Befindet sich zwischen den beiden Endgeräten auf der kürzesten Verbindung ein dämpfendes Medium, welches beispielsweise die Funksignale stärker dämpft als die Dämpfung über die längeren Signalwege, die Reflexionspunkte beinhalten, so wird das Funksignal der kürzesten Verbindung nicht als Hauptsignal aufgefasst, sondern die reflektierten Signale als solches interpretiert, sodass ein fälschlich zu großer Abstand ermittelt wird. Als Hauptsignal sei das Signal mit der größten Amplitude bezeichnet. Mehrere Signale können zeitgleich detektiert werden, wenn eine Antennen-Elektronik Signale aus unterschiedlichen Richtungen getrennt detektieren kann.

Der Erfindung liegt die Aufgabe zu Grunde, eine Abstandsbestimmung zwischen zwei Endgeräten basierend auf Funksignalen bereitzustellen, welche eine verbesserte und genauere Bestimmung des Abstands ermöglicht. Insbesondere ist es ein Ziel der Erfindung, ein Verfahren zur Abstandsmessung bereitzustellen, dass ohne ein Wissen über die Eintrittsrichtung des Signals relativ zur Verbindungsgeraden der beiden Endgeräte auskommt.

### Offenbarung der Erfindung

Es wird ein Verfahren zur Ermittlung eines Abstandes zwischen einem ersten und einem weiteren Endgerät mit den Merkmalen des Anspruchs 1 vorgeschlagen. Ferner werden ein Computerprogramm, ein Speichermedium und ein Endgerät vorgeschlagen. Weitere Vorteile, Wirkungen und Ausgestaltungen ergeben sich aus den Unteransprüchen, der Beschreibung und den beigefügten Figuren.

Die Erfindung betrifft ein Verfahren zur Ermittlung eines Abstandes zwischen einem ersten und mindestens einem weiteren Endgerät. Insbesondere kann das Verfahren zur Ermittlung eines Abstandes zwischen einem ersten Endgerät und einer Mehrzahl an weiteren Endgeräten ausgebildet sein. Das Verfahren wird insbesondere auf dem ersten Endgerät oder dem zweiten Endgerät, alternativ und/ oder ergänzend zentral auf einem Server, ausgeführt, angewendet und/ oder durchgeführt werden. Der Abstand wird insbesondere als eine Strecke, insbesondere Länge, ermittelt. Im Speziellen wird als Abstand neben dem Längenmaß auch eine Richtung und/ oder Orientierung ermittelt, beispielsweise zu einer Referenzrichtung (zum Beispiel Nordpol) umfassen. Das erste Endgerät und das weitere Endgerät sind insbesondere Mobiltelefone, Smartphones, Smart-Devices, Tablets, Funkgeräte und/ oder tragbare Elektronikgeräte.

Das Verfahren sieht vor, alternativ ist dem Verfahren vorgelagert, dass das erste Endgerät Funksignale aussendet, insbesondere, dass die Funksignale von dem weiteren Endgerät empfangen werden. Funksignale wird im Folgenden im Plural verwendet, wobei der Singular (Funksignal) als Spezialfall umfasst sein soll. Das erste Endgerät sendet die Funksignale beispielsweise gleichmäßig, kugelförmig oder kegelförmig aus. Insbesondere ist die Abstrahlcharakteristik der Funksignale des ersten Endgeräts gleichmäßig Kugelsymmetrisch in alle Richtungen. Im Speziellen ist die Sendeleistung und/ oder Intensität der Funksignale der ersten Endgeräte bekannt. Die Funksignale sind beispielsweise WLAN- oder Bluetooth Signale. Das Funksignal weist insbesondere eine Funksignalamplitude auf.

Das weitere Endgerät und/ oder die weiteren Endgeräte sind ausgebildet, die Funksignale des ersten Endgeräts zu empfangen. Ferner sind das weitere Endgerät und/ oder die weiteren Endgeräte ausgebildet Gegenfunksignale auszusenden, insbesondere an das erste Endgerät zu senden. Die Gegenfunksignale sind vorzugsweise identisch und/ oder ähnlich zu den Funksignalen, beispielsweise in ihrer Amplitude Intensität und/ oder Abstrahlcharakteristik. Die Gegenfunksignale werden von dem Endgerät empfangen. Die Gegenfunksignale sind insbesondere Bluetooth- oder WLAN-Signale. Im Speziellen basiert das Verfahren auf der Überlegung, dass die Funksignale bei der Übertragung im Raum ohne Hindernisse, beispielsweise der Übertragung in Luft, geringer geschwächt werden als mit zusätzlichen Hindernissen auf dem Übertragungsweg. Ferner basiert das Verfahren auf der Überlegung, dass das Funksignal und/ oder die Gegenfunksignale bei Reflexion an einem Punkt nur geringfügig oder vernachlässigbar geschwächt werden. Insbesondere kann das Verfahren vorsehen, dass Verluste bei der Reflexion des berücksichtigt werden.

Das erste Endgerät empfängt die Gegenfunksignale des weiteren Endgeräts und/ oder von weiteren Endgeräten. Basierend auf dem empfangenen Gegenfunksignal und/ oder den Gegenfunksignalen wird mindestens ein Hauptgegensignal bestimmt. Das Hauptgegensignal ist beispielsweise ein empfangenes, auf dem Gegenfunksignal basierendes Signal, mit größter Intensität und/ oder größter Amplitude. Im Folgenden wird insbesondere unter der Bestimmung des Hauptgegensignals die Bestimmung der Amplitude, Leistung und/ oder die Intensität des Hauptgegensignals verstanden. Für das mindestens eine Hauptgegensignal wird eine Signalrichtung bestimmt. Die Signalrichtung ist insbesondere eine Richtung im dreidimensionalen Raum. Die Signalrichtung ist auf ein Referenzsystem bezogen, beispielsweise Nord-Süd und/ oder Ost-West Richtungen. Im Speziellen können für die empfangenen Gegenfunksignale eine Mehrzahl an Hauptgegensignal bestimmt werden, beispielsweise die Signale mit den zehn größten Amplituden, wobei für diese die zugehörigen Signalrichtungen ermittelt werden. Die Bestimmung des Hauptgegensignals und dessen Signalrichtung kann im ersten Endgerät, im weiteren Endgerät oder zentral, beispielsweise auf einem Server erfolgen.

Das weitere Endgerät empfängt die Funksignale des ersten Endgeräts. Für die empfangenen Funksignale im weiteren Endgerät werden mindestens ein Hauptsignal und eine dazugehörige Signalrichtung bestimmt. Das Hauptsignal ist beispielsweise das auf dem empfangenen Funksignal basierende Signal mit der größten Amplitude und/ oder Intensität. Insbesondere können auch hier eine Mehrzahl an Hauptsignalen, beispielsweise mit den zehn größten Amplituden oder Intensitäten, ermittelt werden und die zugehörigen Signalrichtungen. Die Signalrichtungen des Hauptsignals sind Richtungen im dreidimensionalen Raum, im Speziellen kann eine Richtung im 2-dimensionalen Raum, beispielsweise der Erdoberfläche mit lokal, näherungsweise ebener Oberfläche genutzt werden. Die Signalrichtung des Hauptsignals und die Signalrichtung des Hauptgegensignals sind auf ein gemeinsames System, beispielsweise Referenzsystem bezogen. Beispielsweise sind für diese die Nord-Süd und/ oder Ost-West Orientierung eine Grundlage.

Basierend auf dem mindestens einem Hauptsignal und mindestens einem Hauptgegensignal wird ein Abstand zwischen dem ersten Endgerät und dem weiteren Endgerät bestimmt, wobei dieser als Rohabstand bezeichnet wird und/ oder gesetzt wird. Im Speziellen wird der Rohabstand basierend auf dem Hauptgegensignal und dem dazugehörigen und/ oder das dazugehörige Hauptsignal bestimmt. Beispielsweise erfolgt die Bestimmung basierend auf der Dämpfung des Funksignals über den Laufweg bzw. Abstand. Beispielsweise ist die Amplitude und/ oder Intensität des Hauptgegensignals oder des Hauptsignals beim Aussenden bekannt und als streckenlängenabhängiger Schwächungskoeffizient und/ oder funktionale Zusammenhang der Schwächung bei der Übertragung in Luft, sodass durch Vergleich der Signale am Sende- und Empfangspunkt der Abstand ermittelt wird. Alternativ und/ oder ergänzend werden Laufzeit oder anderweitige Funk, Strahlung oder Wellenphysik basierte Methoden angewendet.

Der ermittelte Rohabstand ist für Hauptgegensignale und/ oder Hauptsignale die an einem Punkt reflektiert wurden und nicht auf dem direkten Weg von Endgerät zu weiterem Endgerät übertragen wurden größer als der reale Abstand zwischen den Endgeräten. Der Rohabstand ist somit zu korrigieren. Für den Fall, dass Hauptgegensignal und Hauptsignal auf direktem Weg zwischen den Endgeräten übertragen wurde, soll die Korrektur insbesondere so ausgestaltet sein, dass sie Null oder nahezu Null ist.

Es wird ein Schnittwinkel zwischen der Signalrichtung des Hauptsignals und der Signalrichtung des zugehörigen Hauptgegensignals ermittelt. Der Schnittwinkel wird als Knickwinkel bezeichnet oder als Knickwinkel gesetzt. Beispielsweise wird die Signalrichtung des Hauptgegensignals und die Signalrichtung des Hauptsignals als vektorielle Größe ermittelt, wobei basierend auf den Vektoren, der Signalrichtungen, der Knickwinkel, beispielsweise basierend auf dem Skalarprodukt, bestimmt werden kann. Der Schnittwinkel wird insbesondere als Winkel kleiner gleich 180° gesetzt und/ oder verstanden, sodass beispielsweise bei Ermittlung eines größeren Winkels als 180° der Ergänzungswinkel zu 360° als der Knickwinkel gesetzt oder verstanden wird. Der Schnittwinkel ist insbesondere der eingeschlossenen Winkel, der gebildet wird durch Schneiden der Signalrichtung des Hauptsignals und der Signalrichtung des Hauptgegensignals.

Basierend auf dem Rohabstand wird ein Messabstand ermittelt. Der Messabstand ist insbesondere der korrigierte Rohabstand, wobei die Korrektur als ein nach unten korrigieren oder unverändert lassen des Rohabstandes in Abhängigkeit von dem Knickwinkel verstanden wird. Insbesondere führt das korrigieren basierend auf dem Knickwinkel des Rohabstandes zum Messabstand zu keiner Vergrößerung, sodass gilt Rohabstand größer gleich Messabstand. Die Korrektur des Rohabstands erfolgt basierend, für und/oder in Abhängigkeit des Knickwinkels. Insbesondere soll für einen Knickwinkel von 180° die Korrektur nahezu 0 oder 0 sein. Beispielsweise ist die Korrektur eine Reduzierung des Rohabstandes, wobei der Rohabstand mit zunehmendem Knickwinkel von 0 zu 180° streng monoton fällt.

Der Erfindung liegt die Überlegung zu Grunde, dass eine Abstandsmessung basierend auf Funksignalen zwischen zwei Endgeräten bisher den Abstand überschätzt, wenn die Signale auf dem direktem/kürzesten Weg geschwächt werden oder komplett absorbiert werden, sodass die empfangenen stärksten Signale auf einem reflektierten Signal basieren und so einen größeren Weg zurückgelegt haben. Bei der Reflexion der Funksignale an einem Reflexionspunkt ergibt sich der Knickwinkel an diesem Punkt. Im Speziellen basiert die Erfindung auf der Überlegung, dass reflektierte Funksignale in der Regel nur einfach reflektiert sind und der Knickwinkel basierend auf Einfallswinkel=Ausfallswinkel dem Winkel an diesem Punkt entspricht. Je nach Knickwinkel sind die reflektierten Signale (z.B. Hauptsignale) und deren Signallaufweg zu korrigieren. Da die Positionen und/oder Lagen der Endgeräte im Raum weder absolut noch relativ zueinander bekannt sind, kann beispielsweise kein geodätischer Vorwärtseinschnitt angewendet werden.

Das vorgeschlagene Verfahren korrigiert den Rohabstand insbesondere alleine auf den ermittelten Signalrichtungen von Funksignal und Gegenfunksignal. Hierzu ist es beispielsweise vorgesehen, dass das weitere Endgerät die ermittelten und/oder bestimmten Hauptsignale und/oder Signalrichtungen des Hauptsignals an das erste Endgerät oder den Server übermittelt. Ferner kann es vorgesehen sein das erste Endgerät das ermittelte Hauptgegensignal und/oder Signalrichtung des Hauptgegensignals an das weitere Endgerät oder den Server bereitstellt.

Besonders bevorzugt ist es, dass die Signalrichtung des Hauptsignals und/oder die Signalrichtung des Hauptgegensignals bezüglich einer gemeinsamen Referenzrichtung und/oder Referenzsystem als ein Winkelmaß ermittelt werden. Das Winkelmaß kann in Grad oder im Bogenmaß ermittelt werden. Die Referenzrichtung, auch Nullrichtung genannt, ist beispielsweise durch die Nord-Süd-Richtung definiert oder darauf bezogen. Beispielsweise greifen die Endgeräte hierzu auf die Magnetfeldrichtungen des Erdmagnetfelds zurück. Der Knickwinkel wird vorzugsweise basierend auf einer Differenz, im Speziellen als die Differenz, der Signalrichtungen des Hauptsignals und der Signalrichtung des Hauptgegensignals ermittelt. Beispielsweise bildet die direkte Verbindung des ersten Endgeräts mit dem weiteren Endgerät eine Basis eines Dreiecks, wobei der Reflexionspunkt den dritten Punkt des Dreiecks bildet. Der Knickwinkel ist hierbei insbesondere der Winkel des Dreiecks am Reflexionspunkt und /oder der Winkel, der der Basis des Dreiecks gegenüberliegt. Basis wird hierbei insbesondere nicht als Dreiecksseite gegenüber von einem rechten Winkel verstanden, sondern gegenüber einem beliebigen Knickwinkel zwischen 0 und 180 Grad. Durch Bezug der Signalrichtungen auf eine gemeinsame, insbesondere beliebige, Referenzrichtung kann der Knickwinkel als Differenz der Signalrichtungen von Hauptsignal und Hauptgegensignal aufgefasst werden.

Das Verfahren sieht insbesondere vor, dass die Funksignale und/oder die Funkgegensignale mittels einer Bluetooth-Verbindung übertragen werden. Insbesondere ist die Bluetooth-Verbindung eine Bluetooth-Low-Energy-Verbindung (BLE). Die Endgeräte, insbesondere das erste und das weitere Endgerät, weisen jeweils eine Bluetooth-Schnittstelle zum Senden und Empfangen der Funksignale bzw. Funkgegensignale auf.

Insbesondere sieht das Verfahren vor, dass das Bestimmen des Hauptsignals und das Bestimmen des Hauptgegensignals zu einem gemeinsamen Zeitpunkt erfolgen. Insbesondere ist es vorgesehen, dass das Bestimmen der Signalrichtungen des Hauptsignals und der Signalrichtung des Hauptgegensignals zu dem gemeinsamen Zeitpunkt erfolgt. Dieser Ausgestaltung liegt die Überlegung zu Grunde, dass durch zeitgleiches Ermitteln, Bestimmen und/oder Messen der Hauptsignale, Hauptgegensignale und/oder zugehörigen Signalrichtungen gleiche Gegebenheiten für alle Signale vorliegen und/oder Parameter gleich sind. Beispielsweise ist es hierzu vorgesehen, dass für das Hauptsignal, das Hauptgegensignal und/oder die Signalrichtungen Metadaten bestimmt werden, wobei die Metadaten den Zeitpunkt der Messung und/oder der Ermittlung umfassen.

Das Verfahren sieht im Speziellen vor, dass zur Bestimmung des Rohabstandes, des Knickwinkels und/oder einer Korrektur des Rohabstandes jeweils ein zu dem Hauptsignal zugehöriges Hauptgegensignal verwendet wird. Das Hauptsignal und das zugehörige Hauptgegensignal weisen insbesondere den gleichen Signalweg, geometrischen Verlauf und/oder Knickwinkel auf. Im Speziellen wird für Hauptsignal und zugehöriges Hauptgegensignal angenommen, dass diese eine gleiche Signallaufstrecke aufweisen und/oder denselben Reflexionspunkt.

Das Verfahren sieht vorzugsweise vor, dass basierend auf dem Hauptsignal und/oder für das Hauptsignal eine Hauptsignalstrecke ermittelt wird. Ferner sieht diese Ausgestaltung vor, dass für das Hauptgegensignal und/oder basierend auf dem Hauptgegensignal eine Hauptgegensignalstrecke ermittelt wird. Die Hauptgegensignalstrecke und/oder die Hauptsignalstrecke sind hierbei der zurückgelegte Weg des Hauptsignals und/oder Hauptgegensignals vom Endgerät zu Reflexionspunkt und weiter zu dem anderen Endgerät. Hauptsignalstrecke und Hauptgegensignalstrecke sind als der zurückgelegte Weg der Signale aufzufassen. Insbesondere entspricht Hauptsignalstrecke der zughörigen Hauptgegensignalstrecke. Basierend auf der Hauptgegensignalstrecke und/oder der Hauptsignalstrecke wird eine untere Messabstandsschranke ermittelt. Die untere Messabstandsschranke ist beispielsweise der minimal aus der Messung zuerwartende korrigierte Abstand zwischen den Endgeräten. Beispielsweise basiert die untere Messabstandsschranke auf einer maximalen Korrektur des Rohabstandes. Eine Ausgestaltung sieht dabei vor, dass die untere Messabstandsschranke basierend auf dem Knickwinkel bzw. dem Kosinus des Knickwinkels und der Hauptgegensignalstrecke oder Hauptsignalstrecke bestimmt wird. Insbesondere basiert diese Ausgestaltung auf der Anwendung des Kosinussatzes im oben beschriebenen Dreieck, zum Beispiel als untere Messabstandsschranke gleich ½ mal Wurzel Zwei mal Hautgegensignalstrecke mal Wurzel aus der Differenz von Eins und Cosinus Beta.

Optional ist es vorgesehen, dass eine obere Messabstandsschranke oS bestimmt wird. Insbesondere ist die obere Messabstandsschranke oS der unkorrigierte Rohabstand. Alternativ und/oder ergänzend wird der Rohabstand zum Erhalten der oberen Messabstandsschranke oS vergrößert, beispielsweise durch die Annahme von inneren Messfehlern, systematischen Fehlern, Absorptionsverlusten und/oder Störungen. Die obere Messabstandsschranke oS bildet somit eine basierend auf der Messung zuerwartende obere Schranke des Abstands zwischen den beiden Endgeräten.

Optional ist die Ermittlung eines mittleren Messabstands vorgesehen, wobei der mittlere Messabstand beispielsweise auf der oberen Messabstandsschranke oS und unteren Messabstandsschranke uS basiert, beispielsweise durch Mittelwertbildung und/oder anderweitige statistische Verknüpfungen. Ferner wird vorzugsweise für die obere und untere Messabstandsschranke uS ein Fehler bestimmt, wobei für den mittleren Messabstand oS ein darauf basierender Fehler ermittelt wird.

Eine Ausgestaltung sieht vor, dass eine Mehrzahl an Hauptsignalen und eine Mehrzahl an Hauptgegensignal, insbesondere zugehörigen Hauptgegensignale, ermittelt werden. Dabei wird für die Mehrzahl an Hauptsignalen und die Mehrzahl an Hauptgegensignalen jeweils die Signalrichtung ermittelt. Basierend auf der Mehrzahl an Hauptsignalen, der Mehrzahl an Hauptgegensignalen wird jeweils ein Rohabstand ermittelt. Basierend auf den Signalrichtungen der Mehrzahl an Hauptsignalen und der Mehrzahl an Hauptgegensignal werden Knickwinkel, insbesondere ebenfalls eine Mehrzahl an Knickwinkeln, ermittelt. Basierend auf der Mehrzahl an Rohabständen und/oder der Mehrzahl an Knickwinkeln wird ein gemittelter Messabstand bestimmt. Beispielsweise kann es vorgesehen sein, dass basierend auf der Mehrzahl an Rohabständen und den Knickwinkeln eine Mehrzahl an Messabständen bestimmt wird, wobei der mittlere Messabstand auf den ermittelten Messabständen basiert. Insbesondere wird für die Messabstände, den gemittelten Messabstand und/oder die Knickwinkel ein zugehöriger Fehler ermittelt. Der Fehler wird vorzugsweise basierend auf den Zusammenhängen der Fehlerfortpflanzung ermittelt.

Besonders bevorzugt ist es, dass der Messabstand basierend auf dem Rohabstand und einem Korrekturfaktor korrigiert wird. Der Korrekturfaktor ist vorzugsweise ein multiplikativer Faktor. Der Korrekturfaktor ist insbesondere maßstabsunabhängig und/oder unabhängig vom Abstand (realem Abstand) der Endgeräte. Der Korrekturfaktor ist vorzugsweise alleine abhängig vom Knickwinkel. Der Korrekturfaktor in Abhängigkeit vom Knickwinkel ist insbesondere durch einen funktionalen Zusammenhang beschreibbar oder modellierbar, wobei der funktionelle Zusammenhang des Korrekturfaktors für zunehmenden Knickwinkel monoton fallend ist, vorzugsweise streng monoton fallend. Vorzugsweise ist der Korrekturfaktor durch ein Tabellenwerk, beispielsweise Loo-up-Tabelle oder Datenbank, auslesbar und/oder hinterlegt. Beispielsweise kann die Hinterlegung im ersten, im weiteren Endgerät oder zentral auf einem Server erfolgen. Das Verfahren sieht somit beispielsweise die Entnahme des Korrekturfaktors aus der Look-up-Tabelle und/oder einer Datenbank vor, sodass das Verfahren mit geringen Rechenaufwand und/oder Prozessorleistung realisierbar ist.

Besonders bevorzugt ist es, dass für einen Knickwinkel im Bereich von 0° bis 180° der Korrekturfaktor zwischen 0 und 25 %, vorzugsweise zwischen 0 und 23 % und im Speziellen zwischen 0 und 21 % liegt. Ferner ist der Korrekturfaktor für 180° vorzugsweise so ausgebildet, dass der Rohabstand dem Messabstand entspricht. Insbesondere basiert diese Ausgestaltung auf der Annahme, dass der Messabstand aus dem Korrekturfaktor k und dem Rohabstand bestimmt wird gemäß: Messabstand = (1-k)*Rohabstand.

Im Speziellen bildet der Korrekturfaktor einen Multiplikationsfaktor, der mit der Hauptsignalstärke oder der Hauptgegensignalstrecke zu multiplizieren ist und so den Messabstand liefert.

Einen weiteren Gegenstand der Erfindung bildet ein Endgerät, wobei das Endgerät vorzugsweise ein Mobiltelefon, ein Smartphone, ein Tablett oder anderweitiges tragbares elektronisches Gerät bildet. Das Endgerät ist ausgebildet und/oder eingerichtet das Verfahren anzuwenden.

Insbesondere sind die Verfahrensschritte als Vorrichtungsmerkmale im Endgerät realisiert.

Weitere Vorteile, Wirkungen und Ausgestaltungen ergeben sich aus der beigefügten Figur und deren Beschreibung. Dabei zeigt:
Figur 1 schematische Anordnung zweier Endgeräte zur Abstandsbestimmung;
Figur 2 eine weitere Anordnung zweier Endgeräte mit Fassungskreis.

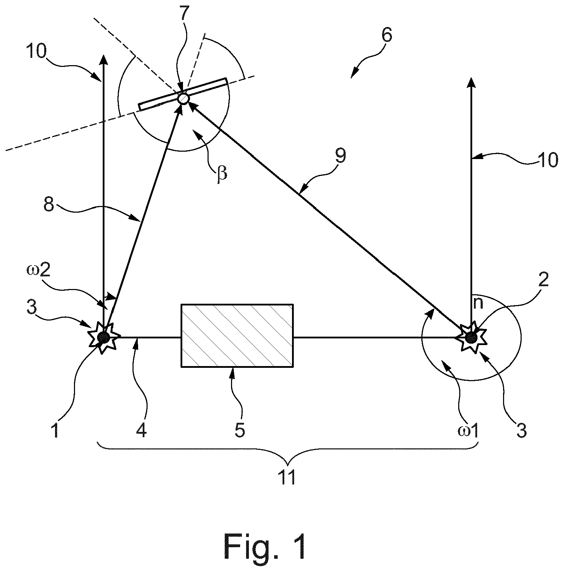

Figur 1 zeigt beispielhaft die Anordnung eines ersten Endgeräts 1 und eines weiteren Endgeräts 2. Das erste Endgerät 1 und das weitere Endgerät 2 senden jeweils ein Funksignal 3, wobei die Funksignale des weiteren Endgeräts 2 als Gegenfunksignale bezeichnet werden, aus. Auf der direkten Verbindung von erstem Endgerät 1 und dem weiteren Endgerät 2 ist Objekt 5 angeordnet, dass Funksignale 3 zwischen den Endgeräten 1, 2 absorbiert. Die direkte Verbindung 4 bildet eine Seite des Dreiecks 6, wobei das Dreieck 6 als Eckpunkte das erste Endgerät 1, das weitere Endgerät 2 und einen Reflexionspunkt 7 aufweist.

Die ausgesendeten Funksignale 3 werden am Reflexionspunkt 7 reflektiert und definieren so die weiteren beiden Seiten 8, 9 des Dreiecks 6. Bei der Reflexion am Reflexionspunkt 7 wird angenommen, dass die Funksignale 3 ohne Verluste reflektiert werden. Ein vom ersten Endgerät 1 ausgesendetes Funksignal 3 mit Signalweg zum weiteren Endgerät 2 über den Reflexionspunkt 7 liefert ein Hauptsignal, wobei für ein vom weiteren Endgerät 2 ausgesendetes Funksignal zu dem Endgerät 1 über den Reflexionspunkt 7 ein Hauptgegensignal liefert, welche einen Signalweg entlang der Seiten 8, 9 aufweisen.

Mit bisherigen Methoden würde als Abstand die Summe der Seitenlängen von 8 und 9 erhalten werden, welche den wahren Abstand 4 überschätzt. Um zum Messabstand zu gelangen und das obige Verfahren anwenden zu können wird der Knickwinkel *β* benötigt. Hierzu werden für Hauptsignal und Hauptgegensignal eine Signalrichtung ω₁ bzw. ω₂ ermittelt, welche sich auf eine gemeinsame Referenzrichtung 10 beziehen. Basierend auf der vorliegenden Geometrie und elementaren Zusammenhängen der Euklidischen-Geometrie ergibt sich ganz allgemein für den Knickwinkel β= ω₂- ω₁. Basierend auf diesem Zusammenhang, der vorliegenden Geometrie, kann der Messabstand 11 durch eine auf dem Knickwinkel β basierende Korrektur des Rohabstandes erhalten werden. Wobei der Rohabstand der Summe der Seitenlängen der Seiten 8 und 9, also der Strecke der Hauptsignale entspricht.

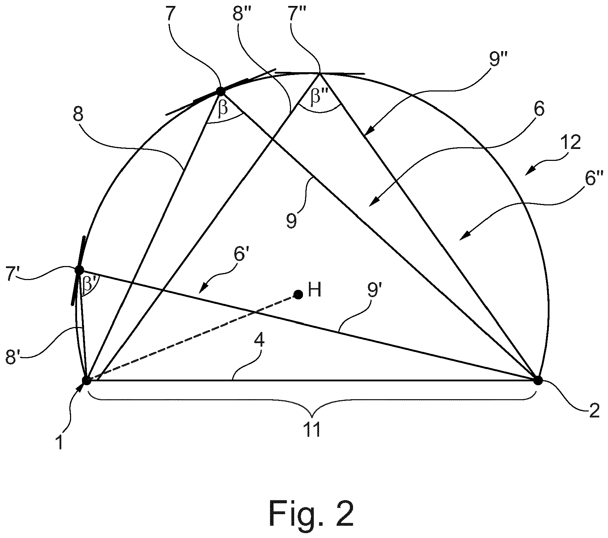

Figur 2 zeigt eine weitere Anordnung von zwei Endgräten 1 und 2. Die Anordnung und Geometrie entsprechen im Wesentlichen der aus Figur 1. Während in Figur 1 nur ein Reflexionspunkt 7 eingezeichnet bzw. angenommen wurde, wird hier verdeutlicht, dass man trotz bekanntem β nicht immer auf die Lage des Reflexionspunktes 7 relativ zur Strecke 4 bzw. der Verbindung der Endgeräte 1 und 2 schließen kann, da es unendlich viele Reflexionspunkte 7 oberhalb der Strecke 4 und nochmals spiegelsymmetrisch unterhalb gibt, für die der Winkel am Punkt 7 gleich β gilt.

Geometrisch gesehen liegen alle Punkte, hier Reflexionspunkte 7, für die eine Strecke, hier 4, unter einem bestimmten Winkel, hier β, erscheint auf einem Kreis, dem sogenannten Fassungskreis 12, der nur ein Teilstück eines speziellen Krieses ist, der eindeutig konstruiert werden kann. In Figure 2 ist nur der Fassungskreis oberhalb der Strecke 4 eigezeichnet. Unterhalb der Strecke 4 existiert ebenfalls ein Fassungskreis, der an der Strecke 4 gespiegelt ist. Es reicht somit aus nur einen dieser beiden Fassungskreise zu diskutieren. Der Fassungskreis 12 und die Reflexionspunkte 7 können mittels des Sehnentangentensatzes ermittelt und konstruiert werden. Hierzu wird der ermittelte Winkel β im Punkt des Endgerätes an die Verbindung 4 angetragen. Eine Senkrechte darauf im Punkt des Endgeräte 1 muss durch den Mittelpunkt M des Fassungskreises 12 verlaufen. Ebenso muß die Mittelsenkrechte auf die Verbindung 4 durch den Mittelpunkt M verlaufen. Mittels Mittelpunkt M kann so der Fassungskreis mit Radius R erhalten werden, wobei der Radius R gleich dem Abstand zwischen Endgerät 1 und Mittelpunkt ist.

Vorliegend sind 2 Reflexionspunkte 7 und 7' eingezeichnet, sodass sich die Dreiecke 6 und 6'ergeben. Gemeinsam haben diese Dreiecke 6 und 6' die Verbindungsstrecke 4. als weitere Dreiecksseiten weist das Dreieck 6 die Seiten 8 und 9 auf, die eine unterschiedliche Länge aufweisen als die Seiten 8'und 9' des Dreiecks 6'. Im Speziellen kann beispielsweise zur Vereinfachung ein Dreieck 6" angenommen werden, dessen Reflexionspunkt 7" auf dem Schnittpunkt der Mittelsenkrechten auf die Verbindung 4 mit dem Fassungskreis 12 liegt. Dieses Dreieck 6" zeichnet sich durch Seiten 8" und 9" aus, die gleichlang sind, so dass für weitere Berechnungen für die Seitenlängen 8" und 9" die Hälfte des gesamten zurückgelegten Signalwegs von Endgerät 1 zu Endgerät 2 angenommen werden kann.

Werden mehrere relevante Hauptsignale ermittelt, für die sich unterschiedliche Winkel β ergeben, können mehrere Fassungskreise 12 zur Konstruktion und Ermittlung der Korrekturen zur Ermittlung des Messabstands herangezogen werden. Werden mehrere Messabstände oder Korrekturen bestimmt, kann als Endergebnis eine ungewichtete oder gewichtete Mittelung der Einzelergebnisse bestimmt werden.

## Patentansprüche

1. Verfahren zur Ermittlung eines Abstands zwischen einem ersten Endgerät (1) und einem weiteren Endgerät (2),
wobei das erste Endgerät (1) Funksignale (3) an das weitere Endgerät (2) sendet und das weitere Endgerät (2) Gegenfunksignale (3) an das erste Endgerät (1) sendet,
wobei das erste Endgerät (1) basierend auf den empfangen Gegenfunksignalen (3) mindestens ein Hauptgegensignal und eine Signalrichtung (ω₂) des Hauptgegensignals bestimmt,
wobei das weitere Endgerät (2) basierend auf den empfangenen Funksignalen (3) mindestens ein Hauptsignal und eine Signalrichtung (ω₁) des Hauptsignals bestimmt,
wobei basierend auf dem mindestens einem Hauptsignal und dem mindestens einem Hauptgegensignal ein Abstand zwischen den Endgeräten als Rohabstand bestimmt wird,
wobei ein Schnittwinkel zwischen der Signalrichtung (ω₁) des Hauptsignals und der Signalrichtung (ω₂) des Hauptgegensignals als ein Knickwinkel (β) zwischen ermittelt wird,
wobei der Rohabstand basierend auf dem Knickwinkel (β) zu einem Messabstand (11) korrigiert wird.

2. Verfahren nach Anspruch 1, **dadurch gekennzeichnet, dass** die Signalrichtung (ω₁) des Hauptsignals und die Signalrichtung (ω₂) des Hauptgegensignals bezüglich einer gemeinsamen Referenzrichtung (10) als ein Winkelmaß ermittelt werden, wobei der Knickwinkel (β) basierend auf einer Differenz der Signalrichtungen (ω₁, ω₂) ermittelt wird.

3. Verfahren nach Anspruch 1 oder 2, **dadurch gekennzeichnet, dass** das Hauptsignal und das Hauptgegensignal zwischen den Endgeräten (1, 2) an einem Reflexionspunkt (7) reflektiert werden, wobei der Knickwinkel (β) am Reflexionspunkt (7) vorliegt.

4. Verfahren nach einem der vorherigen Ansprüche, **dadurch gekennzeichnet, dass** das Senden das Funksingale (3) und/oder der Funkgegensignale (3) auf einer Bluetooth-Verbindung basiert.

5. Verfahren nach einem der vorherigen Ansprüche, **dadurch gekennzeichnet, dass** das Bestimmen des Hauptsignals, des Hauptgegensignals, der Signalrichtung (ω₁) des Hauptsignals und/oder der Signalrichtung (ω₂) des Hauptgegensignals für einen gemeinsamen Zeitpunkt erfolgt.

6. Verfahren nach einem der vorherigen Ansprüche, **dadurch gekennzeichnet, dass** der Rohabstand, der Knickwinkel (β) und/oder die Korrektur für ein zum Hauptsignal zugehörigen Hauptgegensignal bestimmt werden, wobei das Hauptsignal und das Hauptgegensignal eine gleiche Signallaufstrecke aufweisen (8, 9).

7. Verfahren nach einem der vorherigen Ansprüche, **dadurch gekennzeichnet, dass** basierend auf dem Hauptsignal eine Hautsignalstrecke H (8, 9) und/oder basierend auf dem Hauptgegensignal eine Hauptgegensignalstrecke HG ermittelt wird, wobei eine untere Messabstandsschranke uS basierend auf uS^2=2*(H/2)^2*(1-cos β) und/oder uS^2=2*(HG/2)^2*(1-cos β) bestimmt wird.

8. Verfahren nach Anspruch 7, **dadurch gekennzeichnet, dass** eine obere Messabstandsschranke oS bestimmt wird, wobei ein mittlerer Messabstand basierend auf der oberen Messabstandsschranke oS und der unteren Messabstandsschranke uS bestimmt wird.

9. Verfahren nach einem der vorherigen Ansprüche, **dadurch gekennzeichnet, dass** eine Mehrzahl an Hauptsignalen und Hauptgegensignalen ermittelt werden, wobei für die Mehrzahl an Hauptsignalen und Hauptgegensignalen die Signalrichtungen (ω₁, ω₂) ermittelt werden, wobei für die Mehrzahl an Hauptsignalen und die Mehrzahl an Hauptgegensignalen jeweils ein Rohabstand bestimmt wird, wobei basierend auf den Signalrichtungen (ω₁) der Mehrzahl an Hauptsignalen und den Signalrichtungen (ω₂) der Mehrzahl an Hauptgegensignalen jeweils Knickwinkel (β) ermittelt werden, wobei basierend auf der Mehrzahl an Rohabständen und Knickwinkeln (β) ein gemittelter Messabstand bestimmt wird.

10. Verfahren nach einem der vorherigen Ansprüche, **dadurch gekennzeichnet, dass** der Rohabstand basierend zu dem Messabstand (11) mittels eines Korrekturfaktors korrigiert wird, wobei der Korrekturfaktor von dem Knickwinkel (β) abhängig ist, wobei zur Ermittlung des Messabstands (11) der Korrekturfaktor einer Look-up-Tabelle entnommen wird.

11. Verfahren nach Anspruch 9, **dadurch gekennzeichnet, dass** der Korrekturfaktor für steigenden Knickwinkel im Bereich 0 bis 180 Grad streng monoton fallend ist und/oder zwischen 0 und 25 Prozent beträgt.

12. Verfahren nach einem der Ansprüche 10 und 11, **dadurch gekennzeichnet, dass** der Korrekturfaktor ein multiplikativer Faktor für die Hautsignalstrecke (H) und/oder Hauptgegensignalstrecke (HG) ist.

13. Endgerät (1, 2), welches ausgebildet ist, das Verfahren nach einem der Ansprüche 1 bis 12 als erstes Endgerät auszuführen und ausgebildet ist, das Verfahren nach einem der Ansprüche 1 bis 12 als weiteres Endgerät auszuführen.

## Claims

1. Method for determining a distance between a first terminal (1) and a further terminal (2),
wherein the first terminal (1) sends radio signals (3) to the further terminal (2) and the further terminal (2) sends response radio signals (3) to the first terminal (1),
wherein the first terminal (1) determines at least one main response signal and one signal direction (ω₂) of the main response signal based on the received response radio signals (3),
wherein the further terminal (2) determines at least one main signal and one signal direction (ω₁) of the main signal based on the received radio signals (3), wherein a distance between the terminals is determined as the raw distance based on the at least one main signal and the at least one main response signal,
wherein an angle of intersection between the signal direction (ω₁) of the main signal and the signal direction (ω₂) of the main response signal is determined as an interim kink angle (β),
wherein the raw distance is corrected to a measurement distance (11) based on the kink angle (β).

2. Method according to Claim 1, **characterized in that** the signal direction (ω₁) of the main signal and the signal direction (ω₂) of the main response signal are determined as an angular measurement with respect to a common reference direction (10), wherein the kink angle (β) is determined on the basis of a difference between the signal directions (ω₁, ω₂).

3. Method according to Claim 1 or 2, **characterized in that** the main signal and the main response signal are reflected at a reflection point (7) between the terminals (1, 2), wherein the kink angle (β) is located at the reflection point (7).

4. Method according to any one of the preceding claims, **characterized in that** the transmission of the radio signals (3) and/or the response radio signals (3) is based on a Bluetooth connection.

5. Method according to any one of the preceding claims, **characterized in that** the main signal, the main response signal, the signal direction (ω₁) of the main signal and/or the signal direction (ω₂) of the main response signal are determined for a common point in time.

6. Method according to any one of the preceding claims, **characterized in that** the raw distance, the kink angle (β) and/or the correction are determined for a main response signal associated with the main signal, wherein the main signal and the main response signal have the same signal propagation path (8, 9).

7. Method according to any one of the preceding claims, **characterized in that** a main signal propagation path H (8, 9) is determined based on the main signal, and/or a main response signal path HG is determined based on the main response signal, wherein a lower measurement distance limit uS is determined based on uS^2=2*(H/2)^2*(1-cos β) and/or uS^2=2*(HG/2)^2*(1-cos β).

8. Method according to Claim 7, **characterized in that** an upper measurement distance limit oS is determined, wherein a mean measurement distance is determined on the basis of the upper measurement distance limit oS and the lower measurement distance limit uS.

9. Method according to any one of the preceding claims, **characterized in that** a plurality of main signals and main response signals are determined, wherein the signal directions (ω₁, ω₂) are determined for the plurality of main signals and main response signals, wherein a raw distance is determined for each of the plurality of main signals and the plurality of main response signals, wherein kink angles (β) are determined in each case based on the signal directions (ω₁) of the plurality of main signals and the signal directions (ω₂) of the plurality of main response signals, wherein an averaged measurement distance is determined based on the plurality of raw distances and kink angles (β).

10. Method according to any one of the preceding claims, **characterized in that** the raw distance is corrected based on the measurement distance (11) by means of a correction factor, wherein the correction factor is dependent on the kink angle (β), wherein the correction factor is obtained from a look-up table for determining the measurement distance (11).

11. Method according to Claim 9, **characterized in that** the correction factor for increasing kink angle is strictly constantly falling in the range from 0 to 180 degrees and/or has a value between 0 and 25 percent.

12. Method according to one of Claims 10 or 11, **characterized in that** the correction factor is a multiplicative factor for the main signal path (H) and/or for the main response signal path (HG).

13. Terminal (1, 2) that is designed to execute a method according to any one of Claims 1 to 12 as first terminal and is designed to execute the method according to any one of Claims 1 to 12 as further terminal.

## Revendications

1. Procédé pour déterminer une distance entre un premier terminal (1) et un autre terminal (2),
dans lequel le premier terminal (1) transmet des signaux radio (3) à l'autre terminal (2) et l'autre terminal (2) envoie des contre-signaux radio (3) au premier terminal (1),
dans lequel le premier terminal (1) détermine sur la base des signaux radio de compteur (3) au moins un contre-signal principal et une direction de signal (ω₂) du contre-signal principal,
dans lequel l'autre terminal (2), sur la base des signaux radio reçus (3) détermine au moins un signal principal et une direction de signal (ω₁) du signal principal,
dans lequel une distance entre les terminaux est déterminée comme une distance brute sur la base du au moins un signal principal et du au moins un contre-signal principal,
dans lequel un angle d'intersection entre la direction de signal (ω₁) du signal principal et la direction de signal (ω₂) du contre-signal principal est déterminé comme un angle de courbure (β) entre eux,
dans lequel la distance brute est corrigée à une distance de mesure (11) sur la base de l'angle de courbure (β).

2. Procédé selon la revendication 1, **caractérisé en ce que** la direction de signal (ω₁) du signal principal et la direction de signal (ω₂) du contre-signal principal par rapport à une direction de référence commune (10) sont déterminées comme une mesure d'angle, dans lequel l'angle de courbure (β) est déterminé sur la base d'une différence des directions de signaux (ω₁, ω₂).

3. Procédé selon la revendication 1 ou 2, **caractérisé en ce que** le signal principal et le contre-signal principal sont réfléchis entre les terminaux (1, 2) au niveau d'un point de réflexion (7), dans lequel l'angle de courbure (β) est présent au point de réflexion (7).

4. Procédé selon une des revendications précédentes, **caractérisé en ce que** l'envoi des signaux radio (3) et/ou des contre-signaux radio (3) est basé sur une connexion Bluetooth.

5. Procédé selon une des revendications précédentes, **caractérisé en ce qu'**on détermine le signal principal, le contre-signal principal, la direction de signal (ω₁) du signal principal et/ou la direction de signal (ω₂) du contre-signal principal pour un instant commun.

6. Procédé selon une des revendications précédentes, **caractérisé en ce que** la distance brute, l'angle de courbure (β) et/ou la correction sont déterminés pour un contre-signal principal associé au signal principal, dans lequel le signal principal et le contre-signal principal présentent la même distance de parcours de signal (8, 9).

7. Procédé selon une des revendications précédentes, **caractérisé en ce qu'**un parcours de signal principal H (8, 9) est déterminé sur la base du signal principal et/ou un parcours de contre-signal principal HG est déterminé sur la base du contre-signal principal, dans lequel une limite de distance de mesure inférieure uS est déterminée sur la base de uS^2=2*(H/2)^2*(1-cos β) et/ou uS^2=2*(HG/2)^2*(1-cos β).

8. Procédé selon la revendication 7, **caractérisé en ce qu'**une limite de distance de mesure supérieure oS est déterminée, dans lequel une distance de mesure moyenne est déterminée sur la base de la limite supérieure de distance de mesure oS et la limite inférieure de mesure de la distance uS.

9. Procédé selon une des revendications précédentes, **caractérisé en ce qu'**on détermine une pluralité de signaux principaux et de contre-signaux principaux, dans lequel pour la pluralité de signaux principaux et de contre-signaux principaux les directions de signal (ω₁, ω₂) sont déterminées, dans lequel pour la pluralité de signaux principaux et la pluralité de contre-signaux principaux une distance brute respective est déterminée, dans lequel sur la base des directions de signal (ω₁) de la pluralité de signaux principaux et des directions de signal (ω₂) de la pluralité de contre-signaux principaux un angle de courbure respectif (β) est déterminé, dans lequel sur la base de la pluralité de distances brutes et d'angles de courbure (β) une mesure de distance moyenne est déterminée.

10. Procédé selon une des revendications précédentes, caractérisé en la distance brute est corrigée sur la base de la distance de mesure (11) au moyen d'un facteur de correction, dans lequel le facteur de correction dépend de l'angle de courbure (β), dans lequel le facteur de correction est extrait d'une table de correspondance pour déterminer la distance de mesure (11).

11. Procédé selon la revendication 9, **caractérisé en ce que** le facteur de correction pour augmenter l'angle de courbure dans la plage de 0 à 180 degrés est décroissant de manière strictement monotone et/ou est compris entre 0 et 25 pour cent.

12. Procédé selon une des revendications 10 et 11, **caractérisé en ce que** le facteur de correction est un facteur multiplicatif du parcours de signal principal (H) et/ou du parcours de contre-signal principal (HG).

13. Terminal (1, 2), qui est conçu pour mettre en œuvre le procédé selon une des revendications 1 à 12 comme premier terminal et est conçu pour mettre en œuvre le procédé selon une des revendications 1 à 12 comme autre terminal.
